# EUROPEAN PATENT SPECIFICATION

(11) **EP 2 753 587 B1**
(45) Date of publication and mention of the grant of the patent: **09.01.2019**
(21) Application number: 12753740.5
(22) Date of filing: 05.09.2012
(51) Int. Cl.: C02F 3/34, C02F 5/10, C02F 3/10

(54) **DEVICE FOR REDUCING THE CONTENT OF POLLUTING AND/OR UNWANTED SUBSTANCES, PARTICULARLY IN WATER AND OTHER FLUIDS**
VORRICHTUNG ZUR VERMINDERUNG EINES GEHALTS VON UMWELTBELASTENDEN UND/ODER UNERWÜNSCHTEN SUBSTANZEN, INSBESONDERE IN WASSER UND ANDEREN FLÜSSIGKEITEN
DISPOSITIF POUR LA RÉDUCTION DE TENEUR EN SUBSTANCES POLLUANTES ET/OU INDÉSIRABLES, NOTAMMENT DANS L'EAU ET D'AUTRES FLUIDES

(30) Priority: 05.09.2011 IT BO20110510
(43) Date of publication of application: 16.07.2014
(73) Proprietor: Archimede R&D S.R.L., 40133 Bologna (IT)
(72) Inventor: PANIZZA, Lucio, 40133 Bologna (IT)
(74) Representative: Fuochi, Riccardo
(86) International application number: PCT/EP2012/067279
(87) International publication number: WO 2013/034578

(56) References cited:
- WO-A1-2010/145905
- FR-A1- 2 798 137
- FR-A5- 2 142 159
- US-A1- 2010 270 228
- US-A1- 2011 127 208
- US-B2- 7 892 814

## Description

The present invention relates to a device for reducing the content of polluting and/or unwanted substances, particularly in water and other fluids.

Currently, as is known, the waters of natural or artificial watercourses, lakes, rivers, seas and underground water-bearing layers are used to varying extents in the industry. In order to allow this use, the water must be treated and/or purified, because it contains, besides its natural components, also variable quantities of impurities, constituted more frequently by suspended substances, such as sands, clays, organic debris, that make the water turbid and opalescent, in addition to dissolved substances such as organic substances and mineral salts (but also dissolved gases), particularly alkaline earth salts (calcium and magnesium) that are among the leading factors that determine water hardness (defined as the content of calcium and magnesium ions known in the form of sulfate salts, chloride salts, nitrate salts, carbonate salts or hydrogen carbonate salts). Therefore, primary water, because of the impurities cited above, is often subjected to treatments of different kinds (mechanical, physical or chemical), adapted to make them compliant with the requirements of the uses for which they are intended.

For example, one of the most common uses is the one that converts it into drinking water, that is with a degree of purity that makes it suitable for normal domestic consumption or for industrial uses. The process of rendering it potable, therefore, is applied upstream of the water supply systems by making the water pass through various types of plants for removing organic and inorganic material, by means of physical, chemical-physical and biological methods depending on the type of substance to be eliminated from the untreated water that enters the plant.

Finally, plants known as chlorinators, i.e., chlorine metering pumps, are used downstream of processes for rendering water potable and have the important function of making the water introduced in the distribution system hygienically safe.

The substances removed during this process also comprise parasites, some metals and some man-made pollutants, as well as other substances (sodium, calcium, magnesium, iron, aluminum and manganese) that while not being pollutant cause a quality degradation of the water (in terms, for example, of transparency color, but also from an organoleptic point of view).

Among unwanted substances (for example those that can be contained in drinking water), calcium carbonate (i.e., one of the inorganic salts of calcium) plays a fundamental role; its presence in the water often determines the deposition in solid form of residues (usually known as limescale), thus constituting a problem that currently is strongly felt in various sectors of application. More precisely, as is known, the water that passes through the pipes of water distribution systems and is therefore intended to be used for the most disparate purposes, including the supply of electrical household appliances but also for food, contains in various concentrations metallic ions such as the calcium ion, the magnesium ion and/or the iron ion. These ions are usually present in solution in the water (in variable quantities), in the form of sulfates, chlorides, nitrates, carbonates or hydrogen carbonates; however, due to special environmental conditions, they can precipitate and, in the case of calcium carbonates but also of other mineral salts that are in any case insoluble, form limescale deposits. Therefore, as the hardness of the water and/or other fluid (determined by the concentration of calcium and magnesium ions, in the form of sulfate salts, chloride salts, nitrate salts, carbonate salts or hydrogen carbonate salts) increases, so does the danger that the surfaces lapped thereby are progressively affected by the formation of limescale deposits of increasingly large dimensions. The deposits that therefore form on objects such as for example the walls of pipes, of resistance heaters, of exchangers, etcetera (of electrical household appliances, boilers, etcetera), determine very high load losses, with subsequent reduction in effectiveness and reliability and even considerable economic damages; moreover, the reduction of the passage area in the pipes, caused by limescale, can cause blockages and permanent malfunctions to the structures involved.

In order to reduce the hardness of the water and avoid the unpleasant drawbacks caused by the forming of limescale, various solutions are proposed, including the installation of devices that process the water with physical and/or chemical treatments.

Among these plants there are ion-exchange softeners, i.e., devices that use resins, i.e., artificially-produced organic substances that have the particularity of having a mobile functional unit, capable of exchanging ions between the resin itself and the ones dissolved in the water. This system is rather effective, but has various problems, including corrosion phenomena that can cause failure of pipes, boilers and radiators; other problems are linked to the maintenance of said resins, which have to be treated periodically with bactericides and need regeneration with substances that, especially in the industrial field, cause an increase of the polluting load of sewage water.

Another chemical treatment is the one with polyphosphates, which entails the use of phosphates in order to form, together with the calcium carbonate, a single stable macromolecule; since polyphosphates are toxic (and so are some waste products obtained with this process), this method is used generally only for the treatment of water intended for industrial consumption and moreover has problems linked mainly to the difficulty in achieving correct dosage of the polyphosphates.

Moreover, it is useful to note that the two processes described above, by means of ion exchange and by means of polyphosphates, due to their considerable chemical pollution potential should have by law, upstream of the plant, a one-way valve in order to avoid possible pollution of the municipal water distribution system in case of pressure drops, entailing therefore further costs and structural complications.

Another method is also known to prevent the forming of limescale: electrodialysis, which however, despite being environment-friendly, requires very high costs, both for the plant and for maintenance, and is used therefore only in industrial plants.

Indeed in view of the difficulties highlighted above regarding the removal of polluting substances and above all of limescale, it is observed that frequently the water made available by means of the water distribution system to private consumers has a content of unwanted substances that is still above the level permitted by standards for the food use (the water supplied by taps is in fact excessively rich in substances that pollute it or at least are such as to give an unpleasant flavor).

This inevitably forces citizens to use mineral waters, which are so often preferred to tap water, with harmful consequences for the environment, because this creates an increase in the production and use of single-use plastic bottles and therefore an increase in oil consumption in order to manufacture them, in the consequent polluting emissions (both of extraction and refining plants and of the vehicles for transporting them), in the corresponding atmospheric emissions and finally in the packages to be disposed of in landfills.

Moreover, the need to purchase mineral water entails for the consumer a considerable economical outlay, due to the purchase of the water itself and in relation to a series of collateral costs: one must add, in fact, the cost of fuel for moving by car to reach the supermarket and purchase the bottles, besides the costs in terms of time for the transport, arrangement at home and recycling of plastic bottles. There are also indirect costs, which end up burdening the consumer and are linked above all to the countless trips of trucks that travel for hundreds of kilometers in order to transport the empty bottles from the chemical industries that manufacture them to the companies that bottle mineral water (with a consequent increase in pollution and traffic).

Finally, it is useful to note that the need to use mineral waters forces the consumer to go to shops and malls in order to purchase often bulky and heavy packs of, usually, four or six bottles, thus subjecting him to often considerable physical efforts.

Patent n. US 7,892,814 discloses a bioreactor using carbonic anhydrase for extracting carbon dioxide emitted from combustion, or from raw natural gas or a syngas or a biogas, and the method for using carbonic anhydrase for the extraction of carbon dioxide.

The reactor operates at temperatures which are above the temperature optimum for commercially available carbonic anhydrases.

Patent application publication n. US 2011/127208 discloses cyanuric acid hydrolase enzymes, compositions, devices and methods for use in the treatment of a liquid, such as water.

In particular, the enzyme disclosed in this document is suitable for controlling the concentration of cyanuric acid in a water reservoir, such as a swimming pool or the like.

Patent application publication n. US 2010/270228 discloses devices and methods for maintaining chemical balance of chlorinated water.

In particular, such devices and methods perform the enzymatically-catalyzed reduction of the concentration of amide-containing compounds, such as cyanuric acid, found in chlorinated water of swimming pools, spas and other similar structures.

Even more in particular, the enzyme used in the device according to this document is cyanuric acid amidohydrolase.

Patent n. FR 2 798 137 discloses a device using oxidoreductase enzyme in order to produce oxygenated free radicals within a liquid or gaseous flow, for the decontamination and disinfection of food products.

Patent n. FR 2 142 159 discloses a water puryfing device comprising a support - for example a membrane, or a filter - which entraps a specific enzyme which is suitable for reducing the concentration of a determined substance in water.

In particular, this document discloses the use of the enzyme polyphosphatase for eliminating polyphosphates in wastewater.

Patent application publication n. WO 2010/145905 discloses a method for preventing and controlling the formation of biofouling on an object that is immersed or partially immersed in a water environment, in which there is one or more organic or inorganic compounds capable of releasing gas, comprising the step of applying to the surface of the object a composition comprising a polymeric resin and one or more enzymes or a paint or a coating and one or more enzymes, wherein the one or more enzymes are adapted to catalyze a reaction of the one or more compounds that leads to the formation of gas.

The aim of the present invention is to solve the problems mentioned above, providing a device capable of reducing the content of unwanted substances in water and in other fluids.

Within this aim, an object of the invention is to provide a device capable of reducing the hardness of water, defined by the concentration of calcium ions and magnesium ions in the form of sulfate salts, chloride salts, nitrate salts, carbonate salts or hydrogen carbonate salts.

Another object of the invention is to provide a device capable of reducing the hardness of water and at the same time purifying the water from organic substances and/or bacteria and/or viruses and/or endotoxins.

Another object of the invention is to provide a device that allows meeting the demand for consumer goods such as mineral water in bottles and distilled water for electrical household appliances.

A further object of the invention is to provide a device that allows reducing the content of calcium carbonates, and similar inorganic compounds, with a limited environmental impact, and avoiding the discharge of polluting substances into sewers and into the environment in general.

Yet another object of the invention is to provide a device that ensures high reliability in operation.

Another object of the invention is to provide a device that can be obtained easily starting from commonly commercially available elements and materials.

Yet another object of the invention is to provide a device that has low costs and is safe in application.

This aim and these objects are achieved by a device for reducing the content of polluting and/or unwanted substances, particularly in water and other fluids, characterized in that it comprises a support made of polymeric material for a catalyst of the reaction of degradation of inorganic salts into gaseous substances, said catalyst, intended to reduce the energy required for the activation of said reaction and to accelerate its course, being an enzyme selected from the subgroup of carbonic anhydrases.

Further characteristics and advantages of the invention will become more apparent from the description of a preferred but not exclusive embodiment of the device according to the invention, illustrated by way of non-limiting example in the accompanying drawings, wherein:

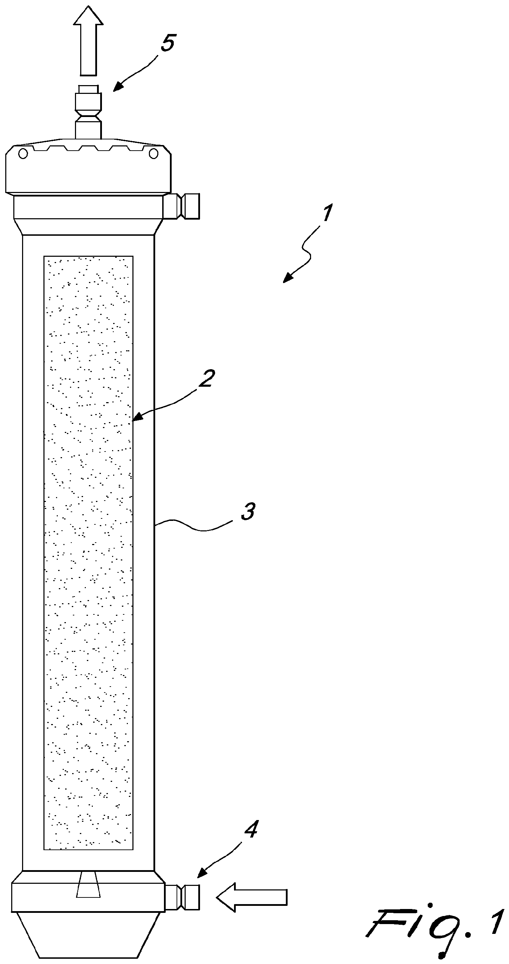

Figure 1 is a schematic view of an application of the device according to the invention.

With reference to the cited figure, the device according to the invention, generally designated by the reference numeral 1, is suitable for reducing the content of polluting and/or unwanted substances, particularly in water and other fluids.

More specifically, a preferred but not exclusive application is the use of the device 1 according to the invention for the treatment of water bodies, understood as water masses that have their own hydrological, chemical characteristics, physical and biological characteristics: therefore, water bodies shall be natural and artificial watercourses, lakes, rivers, seas and underground water-bearing layers.

Even more specifically, the device 1 according to the invention can be used effectively for reducing the content of polluting substances or otherwise unwanted substances in the water of the water bodies listed above, in view of their use in various fields of industry and/or before their introduction in the water distribution systems intended for residential or industrial customers (or in any case before they reach those customers).

The polluting and/or unwanted substances on which the device 1 can act are constituted preferably (but not exclusively) by inorganic compounds that comprise oxide salts with the generic formula of the type of M_{W}(XO_{Z})_{Y}, where M is selected from a metallic ion (for example the calcium ion, Ca²⁺, the magnesium ion, Mg²⁺, or the iron ion, Fe²⁺) and/or a cationic entity. Again with reference to the generic formula cited above, X is an element preferably selected from carbon, nitrogen, sulfur, oxygen, phosphorus, boron, chlorine, fluorine, bromine, iodine and hydrogen. Finally, W, Y and Z are charges such as to give the salt a neutral or balanced charge.

The possibility is thus presented that the inorganic compounds on which the device 1 acts are inorganic salts of the type of salts of carbonates, hydrogen carbonates, sulfates, magnesium nitrates, calcium, strontium, or are inorganic salts of chlorine, sodium, magnesium, sulfur, calcium, potassium, bromine, carbon, strontium, boron, silicon, fluorine, argon, nitrogen and/or a mixture of these compounds. More precisely, with further reference to the preferred application, the inorganic compounds are constituted by carbonates of calcium and/or magnesium, capable, among other things, of precipitating and forming sediments and deposits so as to constitute layers of a material known as limescale.

It is specified right now that use of the device 1 according to the invention is intended, and is in any case within the scope of protection claimed herein, for different fields of application (and/or for the treatment of different fluids), if the specific requirements make this possible or preferable.

According to the invention, the device 1 comprises a support 2 made of polymeric material for a catalyst of the reaction of degradation of inorganic salts into gaseous substances.

Such reaction can be the reaction of decarboxylation and can act for the conversion of inorganic salts into carbon dioxide (and water) according to the following reaction:

HCO₃⁻⁻ + H⁺ ⇄ H₂O + CO₂

Regardless of the specific reaction that occurs in the device 1, the catalyst is suitable for reducing the energy required for the activation of said reaction and is capable moreover of accelerating its course (allowing therefore to make the reaction occur under milder conditions and in less time).

The catalyst is an enzyme selected from the subgroup of carbonic anhydrases.

It should be noted that the catalytic effectiveness of an enzyme, also known as turnover number, is defined as the number of molecules of substrate processed by a molecule of enzyme in the unit time: the turnover number for carbonic anhydrase is one of the highest known (approximately 10⁵-10⁶ molecules processed per second) and the use, therefore, of this enzyme in the device 1 according to the invention is of particular interest.

Conveniently, the device 1 comprises the enzyme at a concentration preferably comprised between 0.001% and 30% and even more preferably at a concentration comprised between 0.005% and 1%, where all the percentages are referred to the total weight (as, besides, will be specified in more detail hereinafter).

The support 2 is made of a polymeric material (capable of retaining the catalyst in a physical and/or chemical manner) selected from polysulfone, cellulose acetate, cellulose acetobutyrate, cellulose nitrate, cellulose propionate, epoxides, polyamides, polyamide imides, polyacrylonitrile, polybutene, polybutylene terephthalate, polycarbonate, polychlorotrifluoroethylene, polydiallyl phthalate, polyethylene, chlorinated polyethylene, polyether imide, polyether ketone, polyether terketone, polyether sulfones, polyethylene terephthalate, polyimide, polyisobutylene, polymethacrylimide, polymethyl methacrylate, poly-4-methylpentene-1, polyacetal, polyformaldehyde, polyoxymethylene, polypropylene, polyphenyl ether, polyphenylene oxide, polyphenylene sulfide, polystyrene, polythiophene, polytetrafluoroethylene, polyurethane, polyvinyl chloride, polyvinylidene chloride, chlorinated polyvinyl chloride, polyvinylidene fluoride, polyvinyl fluoride, regenerated cellulose, silicones, polydimethyl siloxane, ABS.

According to a constructive solution of considerable practical interest, cited by way of non-limiting example of the invention, the support 2 made of polymeric material (capable of retaining the catalyst in a physical and/or chemical manner) comprises a plurality of synthetic fibers preferably selected from polysulfone fibers, acrylic fibers, polyamide fibers, polyethylene fibers, polypropylene fibers, polyester fibers, polyurethane fibers, chlorovinyl fibers, cellulose fibers and fluorofibers, and even more preferably are polysulfone fibers (for reasons that will be illustrated hereinafter).

Advantageously, the support 2 made of polymeric material has, in at least one of its portions, a substantially lattice-like shape, so as to define a plurality of cavities with dimensions preferably but not exclusively comprised between 1 nm and 20 nm.

These cavities have the particularity of having a cut-off preferably lower than or equal to 300 KDa (the device 1 is therefore capable of retaining germs, bacteria, viruses, algae and other biological agents). The cavities can be crossed by the water and/or other fluids to be treated, in order to subject them to the action of the catalyst, associated with the substantially lattice-like portion cited above of the support 2 (and for example accommodated stably in one or more of these cavities).

More particularly, the above cited portion of the support 2 made of polymeric material can be constituted substantially by the already-cited plurality of synthetic fibers, arranged according to the desired lattice-like configuration.

According to a constructive solution of considerable practical interest, which however is non-limiting for the application of the invention, the support 2 is constituted substantially by a membrane composed of hollow polysulfone fibers, which define pores. According to this embodiment, therefore, the catalyst can be preferably contained either in one or more pores or also in the thickness of said fibers or in a combination thereof.

The pores of the membrane, moreover, are capable of retaining physically different organic and biological contaminants according to the dimensions of said pores. It is thus possible to obtain a double effect when the mains water or another fluid to be treated passes through the device 1, i.e., removal of the inorganic substances and purification from organic substances and/or bacteria and/or viruses and/or endotoxins. In fact, as is known, many infectious diseases recognize water as a vehicle of transmission of pathogen microorganisms, transmitting the infectious agent to man directly or indirectly by means of tools or other elements that have come in contact with it; the device 1 according to the invention is thus capable of preventing these risks.

Therefore, it is specified that the percentages cited above, related to the preferred concentration of enzyme, refer to the total weight of the fibers and/or of the polymer (as a function of the specific selected embodiment).

Conveniently, the device 1 comprises means for capturing the enzyme within the support 2, to contrast and prevent the release of the enzyme into the environment. In particular, by way of non-limiting example, it is specified that these capturing means are preferably selected from the cavities already cited, which have smaller dimensions than those of the molecules of the enzyme (as mentioned, these cavities are capable of retaining particles weighing less than 300 KDa, and therefore also the enzyme, which has a weight equal to 30 KDa), a chemical bond of the covalent type conveniently established between the polymeric material of the support 2, and a mesh conveniently provided with the polymeric fibers, designed to retain physically the molecules of the enzyme.

Regardless of the type of capturing means selected (and there is also the possibility of combining two or more of the above-mentioned means, or others optionally selected according to the specific requirements), the release of the catalyst into the environment is effectively contrasted by the support 2, so as to reduce or eliminate completely the quantity of catalyst released into treated waters or other fluids.

The device 1 comprises a duct 3 (or other vessel, for example made of plastic material), which is intended to be crossed by the water to be treated and accommodates the support 2 and the catalyst. The duct 3 can in fact be provided with an inlet 4 and an outlet 5 for the water (or other fluid to be treated) that can be connected to an existing water distribution system (for example immediately upstream of the consumers, or in any other point of the pipes that supply homes, buildings and various built-up structures). Moreover, electrical household appliances of various types are provided with ducts 3 of the above-mentioned type, so as to ensure a supply of water (optionally necessary for its operation) constantly treated by means of the device 1 to the electrical appliance itself.

Moreover, the duct 3 can be provided with suitable units for engaging and fixing to corresponding supporting surfaces, in order to allow the installation and use of the device 1 in different existing apparatuses.

It is specified, moreover, that the possibility is provided, and is in any case within the scope of protection claimed herein, to treat water and other fluids with a plurality of devices 1 according to the invention, arranged in series or in parallel (or as a combination of the two configurations), according to the specific requirements, as will be shown also in the constructive examples used for the tests performed on the device 1, reported on the pages that follow.

The operation of the device according to the invention is as follows.

By subjecting the water or the other fluids to be treated to the action of the device 1, and therefore of the catalyst contained in it, it is possible to obtain the conversion of the salts into non-polluting gaseous substances (for example carbon dioxide), achieving in practice the intended aim, thanks to the action of the enzyme (which indeed constitutes the catalyst), capable of reducing the amount of energy required in order to activate the reaction cited above and to accelerate its course (making it possible, therefore, to make the reaction occur under milder conditions and in less time).

By facilitating the activation and the course of the reaction, therefore, it is possible to obtain in a practical and economical manner the conversion of large quantities of polluting or otherwise unwanted substances from the treated water (or other fluid), containing inorganic compounds of the type of those that have the general formula mentioned above, ensuring thus to different types of users the supply of appropriately treated water.

The enzyme is in fact capable of converting these compounds (for example the carbonate salts) into gaseous carbon dioxide and this makes it possible to achieve the intended aim of reduction of the concentration of unwanted and/or polluting substances. This result, moreover, is obtained without creating harmful effects for man and for the environment: the selected enzyme is, in fact, a totally natural biological element, which is biocompatible and biodegradable and constituted by a single natural protein molecule. Moreover, it should be noted that thanks to the capturing means the enzyme is trapped in the support 2 so that the support 2 prevents its release into the environment and so there is therefore no risk that the catalyst is released into the treated water.

The device 1 according to the invention, therefore, does not contain and/or does not release elements that are harmful or toxic for man or for the environment (or it contains them to a considerably lower extent than apparatuses of the known type usually used in order to achieve the aim achieved with the device 1 according to the invention), thus making it possible to reduce the consumption and the discharge into the natural environment of substances that are harmful for human and environmental health, thus avoiding phenomena of pollution of sewer wastewater.

The use of polymeric fibers of the polysulfone fiber type (a solution which, as mentioned, is an example but does not limit the application of the invention) allows the exploitation of their specific properties, i.e., the particularity of being constituted by a thermoplastic amorphous resin with high performance and characterized by the presence of the SO₂ group. Polysulfone is a material that has interesting properties such as a high loading strength, high temperature in continuous use and excellent dimensional stability. Besides the low absorption of water, it has also a high resistance to hydrolysis, which allows use in applications in contact with hot water. It can be sterilized in various manners and therefore is suitable for contact with food and drinking water and has a good chemical and biological resistance (it withstands the attack of mold).

The device 1 according to the invention can be thus used for different applications, according to the specific requirements, and for example provisions are made for subjecting water to be rendered potable to the action of the device 1, since the action of the enzyme allows an effective removal of the limescale deposits (which are constituted by calcium carbonate) and more generally a reduction of the hardness of water, defined as the concentration of calcium ions and magnesium ions in the form of sulfate salts, chloride salts, nitrate salts, carbonate salts or hydrogen carbonate salts.

The water thus treated can therefore be sent effectively to users, which can thus receive at low cost and in a practical manner water without polluting substances (and/or substances giving an unpleasant flavor), making it absolutely suitable for food use, for use as distilled water (in electrical household appliances, for example) and also for drinking.

This provides private individuals (and not only them) with a resource capable of eliminating the need to resort to mineral water, especially where the water that flows in the water distribution systems is not drinkable, thus reducing and even eliminating the costs, the transports, the inconveniences and the physical efforts linked to the need to have to physically go to the points of sales to purchase said mineral water.

Moreover, it is evident that the device 1 according to the invention, by facilitating higher consumption of the water supplied by one's own taps and thus compensating for the demand for mineral water or distilled water in a bottle, makes it possible to reduce the production of packages (as well as the quantity of vehicles that circulate for its transport), surely contributing thereby to reducing the polluting gas emissions and/or the production of plastic bottles and other waste products, which increasingly are a serious problem for current society.

The choice to resort to an enzyme, such as the ones mentioned above, makes it possible to use a highly specific catalyst, because the protein envelope of the enzyme itself creates a pocket, termed active site, capable of accommodating only the molecules of substrate that are accessible.

Moreover, unlike other elements, the enzyme performs a gradual reduction of the hardness of the water, maintaining in solution a percentage of salts and/or ions (for example, the Ca2+ ion) useful for human health, thus making the use of the device 1 according to the invention absolutely interesting for the treatment of water intended for private users and/or for food uses.

Moreover, the high catalytic efficiency makes it possible to maintain a low concentration of the enzyme inside the device 1 according to the invention, in order to contain the costs required for its provision and marketing, obtaining in this manner a competitive solution from the economic point of view with respect to the apparatuses that are already commercially available. Finally, since the enzyme is a catalyst, it has as a further particularity that of remaining unchanged at the end of the reaction that it catalyzes, thus allowing its use for a large number of catalytic cycles, with further advantages from the economic point of view.

In order to determine the quantity of carbonates present in the water and verify therefore the effectiveness of the developed device 1, an ISE electrode for carbon dioxide, i.e., a combined electrode, of the commercial type, that comprises one pH electrode immersed in an electrolytic solution and separated from the sample to be measured by means of a film permeable to the carbon dioxide itself, was selected. The film and the electrolyte can be replaced; therefore, they are supplied with the instrument. When the gas diffuses inside the film, it dissolves into the electrolytic solution, producing a variation of pH, recorded by the pH electrode: the detected difference of potential is used to determine the concentration of carbon dioxide present in the solution.

This electrode is connected to a portable pH/ion/conductivity measurement unit, which has a resolution of 0.1 mV, which is required in order to support this type of electrode.

In order to perform quantitative measurements, the instrument is calibrated before the reading of the samples is started. The method and the conditions of the assay are the ones reported in the manual of the electrode, made available by the producer: hereinafter the solutions to be prepared for the measurements are given.
- 1 M sodium citrate pH 4.5: 58.8 g of sodium citrate (MW=294.10 g/mol) are weighed in a total volume of 200 ml, pH adjusted with 37% hydrochloric acid;
- Storage solution: 0.1 M NaCl - 0.292 g of sodium chloride (MW=58.443 g/mol) are weighed in a total volume of 50 ml;
- standard preparation 1000 ppm CO₂: 0.1905 g of sodium bicarbonate (MW=84.01 g/mol) are weighed in a total volume of 100 ml;
- standard preparation 100 ppm CO₂: prepared by dilution, 10 ml of the solution at 1000 ppm are drawn and placed in a total volume of 100 ml;
- standard preparation 10 ppm CO₂: prepared by dilution, 1 ml of the solution at 1000 ppm is drawn and placed in a total volume of 100 ml.

Before performing the measurements, 15 drops of electrolytic solution are added to the device 1, which is constituted by one of the type described above, and the electrode is assembled, leaving it then to be conditioned for approximately 30 minutes in the storage solution. The general conditions for performing calibration are as follows:
- placing in a beaker 45 ml of standard preparation and adding 5 ml of sodium citrate 1 M (in order to release all the carbonates and bicarbonates present in the solution). The use of a special miniaturized ampoule makes it possible to perform the measurements with 3.6 ml of standard preparation and 0.4 ml of sodium citrate 1 M (total volume 4 ml).

It is specified that the passage described above uses all three standard preparations illustrated in the previous paragraphs (1000 ppm CO₂, 100 ppm CO2, 100 ppm CO2), drawing therefore 45 ml for each one of them and repeating the procedure described on these pages for each one of them, so as to allow the application of the method on any type of sample (mains water, beverages, calibration standards). At the end of each one of the three steps (with corresponding preparations), the beaker and the electrode are washed, in order to allow the starting of a new step with a different preparation.
- keeping the solution under agitation.
- recording for each reading the value of the potential, expressed in mV, and trace a calibration curve, plotting the mVs recorded against the logarithm of the concentration (semilogarithmic plot).

For measurements, one proceeds as for calibration: the content of carbon dioxide in the sample is calculated by plotting the value of the mV recorded on the calibration curve. It is possible to halve the assay volumes to 20 ml, taking care to keep the volume of sodium citrate 1 M equal to 1/10 of the total volume (final concentration 100 mM).

After measuring highly concentrated solutions it is advisable to immerse the electrode in the storage solution for at least 30 minutes in order to re-balance the response.

The conversion table between the different units of concentration in which it is possible to express the result of the measurement is presented below.

| **mol/l CO₂** | **ppm CO₂** | **ppm CaCO₃** |
|---|---|---|
| 0.01 | 440 | 1000 |
| 0.001 | 44 | 100 |
| 0.0001 | 4.4 | 10 |

By means of the calibration and testing procedure reported above, tests were therefore conducted to verify the effectiveness of the device 1 according to the invention.

### Test 1.

A test is prepared with five supports 2 arranged in series, loaded respectively with the quantities of enzyme reported in the table:

| | |
|---|---|
| first support | 21.7 mg |
| second support | 22.7 mg |
| third support | 106.6 mg |
| fourth support | 21.2 mg |
| fifth support | 19.4 mg |

Three different tests are performed at different flow-rates. It is noted that 1°f corresponds to 10 mg/l of calcium carbonate.

The results of the first test, at a flow-rate of 1.15 1/min, are given below.

| Samples | Average (f°) | Decrease |
|---|---|---|
| Mains water | 39 | |
| Outlet of filter 1 | 25 | -14 |
| Outlet of filter 2 | 26 | -13 |
| Outlet of filter 3 | 27 | -12 |
| Outlet of filter 4 | 27 | -12 |
| Outlet of filter 5 | 29 | -10 |

The following table lists the results of the second test, with a flow-rate of 2.5 1/min.

| Samples | Average (f°) | Decrease |
|---|---|---|
| Mains water | 39 | |
| Outlet of filter 1 | 34 | -5 |
| Outlet of filter 2 | 32 | -7 |
| Outlet of filter 3 | 26 | -13 |
| Outlet of filter 4 | 29 | -10 |
| Outlet of filter 5 | 26 | -13 |

The results of a static test are given below: the various supports 2 were filled and a waiting time of 135 minutes elapsed before the hardness of the water inside was measured.

| Samples | Average (f°) | Decrease |
|---|---|---|
| Mains water | 39 | |
| Outlet of filter 1 | 29 | -10 |
| Outlet of filter 3 | 31 | -8 |
| Outlet of filter 5 | 27 | -12 |

### Test 2.

In this case, two supports 2 arranged in parallel (loaded with the corresponding enzymes) were connected to the water mains, letting the water flow at the flow-rates indicated in the following paragraphs, for an average of 6 hours per day.

The following table shows the results of the tests performed with flow-rates of 2 1/min.

| | T=6h 7201 | T=17h 20401 | T=31h 37201 | T=43h 51601 | T=123h 147601 |
|---|---|---|---|---|---|
| Mains water (°f) | 52 | 51 | 51 | 48 | 54 |
| Processed water (°f) | 37 | 30 | 34 | 31 | 33 |
| Difference (°f) | 15 | 21 | 17 | 17 | 21 |

The next table instead shows the results of the tests performed with flow-rates of 8 1/min.

| | T=86 hours 412801 | T=108 hours 518401 |
|---|---|---|
| Mains water (°f) | 47 | 55 |
| Processed water (°f) | 34 | 38 |
| Difference (°f) | 13 | 17 |

### Test 3.

The purpose of the test is to evaluate the activity of the polyamide polymeric support to which the enzyme, particularly an enzyme of the class of carbonic anhydrase, is bound in a covalent manner.

More specifically, the purpose of the test is to verify the activity of degradation of this support 2, to which the enzyme is bound in a covalent manner, against inorganic salts such as carbonate salts and/or bicarbonate salts dissolved in water.

The test 3 according to the invention provides for 2 successive steps:
step 1. covalent immobilization of the carbonic anhydrase enzyme on the (polyamide) polymeric support 2 and characterization of the immobilization output;
step 2. determination of the activity of degradation of the supports 2 of step 1 against carbonate salts and/or bicarbonate salts.

All the samples were analyzed with the electrode sensitive to CO₂, so as to establish the activity of the immobilized enzyme and of the residual enzyme. In fact, a specific aspect of the invention is the degradation of the carbonate and/or bicarbonate salts and their consequent transformation into CO2. The activity assays were performed at pH 7.6 and at room temperature.

The invention, in fact, has the specific aspect of promoting, in a non-obvious manner, the transformation of these salts into CO₂, by means of a particular catalytic activity of the carbonic anhydrase.

More precisely, the step 1 of immobilization by introduction of a single bond provides for the following steps:
1a. Adding 100 g of Nylon6 (3-mm pellets) pre-treated to 784 ml of sodium phosphate 100 mM pH 8.
1b. Adding 16 ml of 25% glutaraldehyde to the 784 ml of sodium phosphate (final volume 800 ml, final concentration of the glutaraldehyde: 0.5%).
1c. Adding the Nylon6 and derivatizing for 1 h at 20°C.
1d. Transferring the treated and derivatizated Nylon6 into the enzyme solution and leaving under agitation for 17 h at 20°C.
1e. Performing two washes with 11 of double-distilled water.
If. Leaving the Nylon6 to dry under a hood for approximately 15 h.

### RESULTS

During the process of immobilization, two samples of enzyme in solution were taken: the first sample represents the enzyme solution at the initial moment of the immobilization process (t₀), whereas the second sample represents the residual enzyme solution at the end of said immobilization (after 17 h). This sampling was performed for each immobilization experiment; in a parallel manner, at the end of the immobilization process, a fraction of the Nylon6 containing the immobilized enzyme was preserved.

The 10 samples containing the residual enzyme in solution were analyzed with the Bradford method, so as to determine the total concentration of proteins. Each sample was double analyzed.

In the case of the 4 batches of Nylon produced by means of single-bond immobilization, the concentration of initial enzyme was found equal to 3.6 ± 0.3 mg/ml, whereas the concentration of residual enzyme at the end of the immobilization process was found equal to 3.2 ± 0.13 mg/ml. The immobilization yield estimated according to protein concentration data was found equal to 2.1 ± 1.4%.

Step 2 entails therefore an evaluation of the activity of the solid polyaminide support 2 (Nylon6) to which the carbonic anhydrase enzyme is bonded in a covalent manner.

The purpose of this experimentation is to verify the non-obvious activity of the carbonic anhydrase enzyme, if immobilized on a polymeric support, in the catalysis of the reaction of degradation of carbonate and/or bicarbonate salts dissolved in water.

The evaluation of this activity was performed at room temperature and at a pH lower than 9, because these have been found to be the most effective parameters of operation.

The protocol entails:
2a. Preparing 200 ml of sodium citrate 150 mM pH 5 (1X);
2b. Preparing 100 ml of Tris-HCl 400 mM pH 7.6 (2X);
2c. Preparing 5 ml of zinc sulphate 1 mM (1000X);
2d. Preparing 10ml of sodium bicarbonate 50 mM (10X);
2e. Determining the calibration curve with 0.050, 0.5 and 5 mM of sodium bicarbonate; the analysis is performed by keeping the solution under agitation and waiting for approximately 20 minutes in order to reach a constant concentration of carbon dioxide.
   The solutions to be prepared are:
   - White: 30 ml of sodium citrate pH 5.
   - Sample 0.05 mM: 300 µl sodium bicarbonate 50 mM + 30 ml of sodium citrate pH 5.
   - Sample 0.5 mM: 300 µl sodium bicarbonate 50 mM + 30 ml of sodium citrate pH 5.
   - Sample 5 mM: 3 ml sodium bicarbonate 50 mM + 27 ml of sodium citrate pH 5.
2f. Analysis of the Nylon6 containing immobilized carbonic anhydrase:
   - 4.5 ml of double distilled water
   - 4.5 ml of Tris-HCl 400 mM
   - 10 µl of zinc sulphate 1 mM
   - 0.74 mg of Nylon6
   - Performing a measurement for 20 s, then adding 1 ml of sodium bicarbonate 50 mM.

### RESULTS

All the samples were analyzed with the electrode sensitive to CO₂, so as to establish the activity of the immobilized enzyme and of the residual one. In the case of the samples immobilized by means of a single bond, the average activity detected in the Nylon was found equal to 37.9 ± 12.40 µg CO_{2/}l·s.

### Test 4.

This test provides for studying the activity of the polyamide polymeric support 2 around which the enzyme, particularly an enzyme of the class of carbonic anhydrase, is cross-linked and bonded.

More specifically, the purpose of Test 4 is to verify the activity of degradation of this support 2, to which the enzyme is cross-linked externally, against inorganic salts such as carbonate salts and/or bicarbonate salts dissolved in water.

Test 4 according to the invention was performed in 2 successive steps:
step 1. covalent immobilization of the carbonic anhydrase enzyme on the (polyamide) polymeric support 2 and characterization of the immobilization output;
step 2. determination of the activity of degradation of the supports 2 of step 1 against carbonate salts and/or bicarbonate salts.

All the samples were analyzed with the electrode sensitive to CO₂, so as to establish the activity of the immobilized enzyme and of the residual one. In fact, a specific aspect of the invention is the degradation of the carbonate salts and/or bicarbonate salts and their consequent transformation into CO₂. Activity assays were performed at pH 7.6 and at room temperature.

The invention, in fact, has the specific aspect of promoting, in a non-obvious manner, the transformation of these salts into CO₂, by means of a particular catalytic activity of carbonic anhydrase.

More precisely, step 1 of immobilization by cross-linking provides for the following steps:
1a. Dissolving 8 g of enzyme 400 ml of dibasic sodium phosphate 100 mM pH 8, leaving under agitation for about 1 h (solution 1).
1b. Adding 16 ml of glutaraldehyde 25% in 400 ml of dibasic sodium phosphate 100 mM pH 8 and leaving it to disperse for 1 min (solution 2).
1c. Adding 100 g of Nylon6 in solution 2.
1d. Transferring solution 1 into solution 2.
1e. Incubating the Nylon6 for 17 h at 20°C under agitation.
1f. Performing appropriate washes.
1g. Leaving the treated Nylon6 to dry.

### RESULTS

During the process of immobilization, two samples of enzyme in solution were collected: the first sample represents the solution of enzyme at the initial moment of the process of immobilization (t₀), whereas the second sample represents the solution of residual enzyme at the end of said immobilization (after 17 h). This sampling was performed for each immobilization experiment; in parallel, at the end of the immobilization process a fraction of the Nylon6 containing the immobilized enzyme was preserved.

The 10 samples containing the residual enzyme in solution were analyzed with the Bradford method so as to determine the total concentration of proteins. Each sample was double analyzed.

The immobilization yield for cross-linking, estimated on the basis of the activity data (considering the total residual and immobilized activity), is equal to 2.4%.

Step 2, therefore, provides for performing a study of the activity of the polyamide (Nylon6) solid support 2 to which the carbonic anhydrase enzyme is cross-linked externally.

The purpose of this experimentation is to verify the non-obvious activity of the carbonic anhydrase enzyme, if immobilized by cross-linking on a polymeric support, in the catalysis of the reaction of degradation of carbonate salts and/or bicarbonate salts dissolved in water.

The activity tests were conducted at ambient temperature and with a pH lower than 9, since these were found to be the most effective parameters of operation.

### PROTOCOL

2a. Preparing 200 ml of sodium citrate 150 mM pH 5 (1X)
2b. Preparing 100 ml of Tris-HCl 400 mM pH 7.6 (2X)
2c. Preparing 5 ml of zinc sulphate 1 mM (1000X)
2d. Preparing 10 ml of sodium bicarbonate 50 mM (10X)
2e. Defining the calibration curve with 0.050, 0.5 and 5 mM of sodium bicarbonate; analysis is performed while keeping the solution under agitation stirring and waiting for approximately 20 min in order to reach a constant concentration of carbon dioxide.
   Solutions to be prepared:
   - White: 30 ml of sodium citrate pH5.
   - Sample 0.05 mM: 30 µl sodium bicarbonate 50 mM + 30 ml of sodium citrate pH5.
   - Sample 0.5 mM: 300 µl sodium bicarbonate 50 mM + 30 ml of sodium citrate pH5.
   - Sample 5 mM: 3 ml sodium bicarbonate 50 mM + 27 ml of sodium citrate pH5.
2f. Analysis of the Nylon6 containing immobilized carbonic anhydrase:
   - 4.5 ml of double distilled water
   - 4.5 ml of Tris-HCl 400 mM
   - 10 µl of zinc sulphate 1 mM
   - 0.74 mg of Nylon6
   - performing a measurement for 20 s, then adding 1 ml of sodium bicarbonate 50 mM.

### RESULTS

All the samples were analyzed with the electrode sensitive to CO₂, so as to establish the activity of the immobilized enzyme and of the residual enzyme. In the case of samples immobilized by cross-linking, the average activity observed in Nylon was found to be equal to 14 µg CO₂/l·s.

In practice it has been found that the device according to the invention fully achieves the intended aim, since the use of a support made of polymeric material for a catalyst, which is constituted by an enzyme preferably selected from the group of lyases, the group of hydrolases and the group of oxidoreductases, capable of reducing the energy required for the activation of the reaction of degradation of inorganic salts into gaseous substances and for accelerating its course, allows reducing the content of unwanted substances in water or other fluids.

The invention thus conceived is susceptible of numerous modifications and variations, all of which are within the scope of the appended claims; moreover, all the details may be replaced with other technically equivalent elements.

For example, the possibility is not excluded of providing the device according to the invention with additives and additional filtering elements, for example intended to block, filter, remove from the water and/or from other treated fluids, specific polluting agents, even of the type of organic substances, such as germs, algae, bacteria, viruses, endotoxins, etcetera.

In the examples shown, individual characteristics, given in relation to specific examples, may actually be interchanged with other different characteristics that exist in other examples of embodiment.

In practice the materials used, as well as dimensions, may be any according to the requirements and the state of the art.

Wherein technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for the treatment of water bodies, comprising
a support (2) made of polymeric material for a catalyst of the reaction of degradation of inorganic salts into gaseous substances, and
a duct (3) or other vessel which is intended to be crossed by the water to be treated and which accommodates said support (2) and the catalyst,
said support (2) being made of a polymeric material capable of retaining the catalyst in a physical and/or chemical manner, selected from polysulfone, cellulose acetate, cellulose acetobutyrate, cellulose nitrate, cellulose propionate, epoxides, polyamides, polyamide imides, polyacrylonitrile, polybutene, polybutylene terephthalate, polycarbonate, polychlorotrifluoroethylene, polydiallyl phthalate, polyethylene, chlorinated polyethylene, polyether imide, polyether ketone, polyether terketone, polyether sulfones, polyethylene terephthalate, polyimide, polyisobutylene, polymethacrylimide, polymethyl methacrylate, poly-4-methylpentene-1, polyacetal, polyformaldehyde, polyoxymethylene, polypropylene, polyphenyl ether, polyphenylene oxide, polyphenylene sulfide, polystyrene, polythiophene, polytetrafluoroethylene, polyurethane, polyvinyl chloride, polyvinylidene chloride, chlorinated polyvinyl chloride, polyvinylidene fluoride, polyvinyl fluoride, regenerated cellulose, silicones, polydimethyl siloxane, ABS,
**characterized in that** said catalyst is an enzyme selected from the subgroup of carbonic anhydrases, said inorganic salts being of the type of salts of carbonates, hydrogen carbonates, sulfates, magnesium nitrates, calcium, potassium, bromine, carbon, strontium, boron, silicon, fluorine, argon, nitrogen and/or a mixture of these compounds,
said reaction being the reaction of decarboxylation and acting for the conversion of inorganic salts into carbon dioxide and water according to the following reaction:
HCO₃⁻⁻ + H⁺ ↔ H₂O + CO₂.

2. The device according to claim 1, wherein said duct (3) is provided with an inlet (4) and an outlet (5) for the water to be treated.

3. The device according to claims 1 and 2, **characterized in that** it comprises said enzyme at a concentration preferably comprised between 0.001% and 30%, said percentages referring to the total weight, and even more preferably at a concentration comprised between 0.005% and 1%, said percentages referring to the total weight.

4. The device according to one or more of the preceding claims, **characterized in that** said support (2) made of polymeric material comprises a plurality of synthetic fibers.

5. The device according to claim 4, **characterized in that** said support (2) made of polymeric material has, in at least one of its portions, a substantially lattice-like shape, so as to define a plurality of cavities with dimensions comprised preferably between 1 nm and 20 nm, which can be crossed by water and other fluids to subject them to the action of said catalyst, associated with said at least one substantially lattice-like portion of said support (2).

6. The device according to claim 5, **characterized in that** said at least one portion of said support (2) made of polymeric material is constituted substantially by said plurality of synthetic fibers, arranged according to said lattice-like configuration.

7. The device according to claim 6, **characterized in that** said support (2) is constituted substantially by a membrane composed of hollow polysulfone fibers, which define respective pores, said catalyst being preferably contained in at least one of said pores and the thickness of said fibers.

8. The device according to one or more of the preceding claims, **characterized in that** it comprises means for capturing said enzyme within said support (2), to contrast and prevent the release of said enzyme into the environment, said capture means being preferably selected from said cavities having dimensions smaller than those of the molecules of said enzyme, a chemical bond of the covalent type between said polymeric material of said support (2), and a mesh of said polymeric fibers, designed to retain physically said molecules of said enzyme.

## Patentansprüche

1. Vorrichtung zur Behandlung von Wasserkörpern, umfassend
einen Träger (2) aus polymerem Material für einen Katalysator der Zersetzungsreaktion von anorganischen Salzen in gasförmige Substanzen, und
einen Kanal (3) oder ein anderes Gefäß, das dazu bestimmt ist, von dem zu behandelnden Wasser durchquert zu werden, und den besagten Träger (2) und den Katalysator aufnimmt,
wobei der besagte Träger (2) aus einem polymeren Material besteht, das in der Lage ist, den Katalysator auf eine physikalische und/oder chemische Weise zurückzuhalten, ausgewählt aus Polysulfon, Celluloseacetat, Celluloseacetobutyrat, Cellulosenitrat, Cellulosepropionat, Epoxiden, Polyamiden, Polyamidimiden, Polyacrylonitril, Polybuten, Polybutylenterephthalat, Polycarbonat, Polychlortrifluorethylen, Polydiallylphthalat, Polyethylen, chloriertes Polyethylen, Polyetherimid, Polyetherketon, Polyetherterketon, Polyethersulfonen, Polyethylenterephthalat, Polyimid, Polyisobutylen, Polymethacrylimid, Polymethylmethacrylat, Poly-4-Methylpenten-l, Polyacetal, Polyformaldehyd, Polyoxymethylen, Polypropylen, Polyphenylether, Polyphenylenoxid, Polyphenylensulfid, Polystyrol, Polythiophen, Polytetrafluorethylen, Polyurethan, Polyvinylchlorid, Polyvinylidenchlorid, chloriertes Polyvinylchlorid, Polyvinylidenfluorid, Polyvinylfluorid, regenerierte Cellulose, Silikone, Polydimethylsiloxan, ABS,
**dadurch gekennzeichnet, dass** der besagte Katalysator ein Enzym ist, ausgewählt aus der Untergruppe der Carboanhydrasen, wobei die besagten anorganischen Salze vom Typ der Salze von Carbonaten, Hydrogencarbonaten, Sulfaten, Magnesiumnitraten, Kalzium, Kalium, Brom, Kohlenstoff, Strontium, Bor, Silizium, Fluor, Argon, Stickstoff und/oder ein Gemisch dieser Verbindungen sind,
wobei die besagte Reaktion die Reaktion der Decarboxylierung ist und zur Umwandlung von anorganischen Salzen in Kohlendioxid und Wasser gemäß der folgenden Reaktion wirkt:
HCO₃⁻⁻ + H⁺ ↔ H₂O + CO₂.

2. Vorrichtung nach Anspruch 1, worin der besagte Kanal (3) mit einem Einlass (4) und einem Auslass (5) für das zu behandelnde Wasser versehen ist.

3. Vorrichtung nach den Ansprüchen 1 und 2, **dadurch gekennzeichnet, dass** sie das besagte Enzym in einer Konzentration umfasst, die bevorzugt zwischen 0,001 % und 30 % liegt, wobei sich die besagten Prozentwerte auf das Gesamtgewicht beziehen, und noch bevorzugter in einer Konzentration, die zwischen 0,005 % und 1 % liegt, wobei sich die besagten Prozentwerte auf das Gesamtgewicht beziehen.

4. Vorrichtung nach einem oder mehreren der vorangegangenen Ansprüche, **dadurch gekennzeichnet, dass** der besagte Träger (2) aus polymerem Material eine Vielzahl von synthetischen Fasern umfasst.

5. Vorrichtung nach Anspruch 4, **dadurch gekennzeichnet, dass** der besagte Träger (2) aus polymerem Material in mindestens einem seiner Abschnitte eine im Wesentlichen gitterartige Form aufweist, sodass eine Vielzahl von Hohlräumen mit Abmessungen definiert wird, die vorzugsweise zwischen 1 nm und 20 nm liegen, die von Wasser und anderen Flüssigkeiten durchquert werden können, um sie der Wirkung des besagten Katalysators auszusetzen, der dem mindestens einen im Wesentlichen gitterartigen Abschnitt des besagten Trägers (2) zugeordnet ist.

6. Vorrichtung nach Anspruch 5, **dadurch gekennzeichnet, dass** der besagte mindestens eine Abschnitt des besagten Trägers (2) aus polymerem Material im Wesentlichen aus der Vielzahl von synthetischen Fasern besteht, die gemäß der besagten gitterartigen Konfiguration angeordnet sind.

7. Vorrichtung nach Anspruch 6, **dadurch gekennzeichnet, dass** der besagte Träger (2) im Wesentlichen aus einer Membran aus hohlen Polysulfonfasern besteht, die entsprechende Poren definieren, wobei der besagte Katalysator vorzugsweise in mindestens einer der besagten Poren und der Dicke der besagten Fasern enthalten ist.

8. Vorrichtung nach einem oder mehreren der vorangegangenen Ansprüche, **dadurch gekennzeichnet, dass** sie Mittel zum Einfangen des Enzyms innerhalb des besagten Trägers (2) umfasst, um die Freisetzung des besagten Enzyms in die Umgebung zu kontrastieren und zu verhindern, wobei die besagten Einfangmittel vorzugsweise aus den besagten Hohlräumen ausgewählt werden, die kleinere Abmessungen als diejenigen der Moleküle des besagten Enzyms, eine chemische Bindung des kovalenten Typs zwischen dem besagten polymeren Material des besagten Trägers (2) und ein Netz der besagten polymeren Fasern, das dazu ausgebildet ist, die besagten Moleküle des besagten Enzyms physikalisch zurückzuhalten, haben.

## Revendications

1. Dispositif pour le traitement d'étendues d'eau, comprenant
un support (2) constitué de matière polymère pour un catalyseur de la réaction de dégradation de sels inorganiques en substances gazeuses, et
un conduit (3) ou autre récipient destiné à être traversé par l'eau qui doit être traitée et qui accueille ledit support (2) et le catalyseur,
ledit support (2) étant constitué d'une matière polymère capable de conserver le catalyseur de manière physique et/ou chimique, sélectionnée parmi le polysulfone, l'acétate de cellulose, l'acétobutyrate de cellulose, le nitrate de cellulose, le propionate de cellulose, les époxydes, les polyamides, les polyamides-imides, le polyacrylonitrile, le polybutène, le polytérephthalate de butylène, le polycarbonate, le polychlorotrifluoroéthylène, le poly diallyl phthalate, le polyéthylène, le polyéthylène chloré, le polyétherimide, le polyéthercétone, le polyéthertercétone, les polyéthersulfones, le polyéthylène térephthalate, le polyimide, le polyisobutylène, le polyméthacrylimide, polyméthacrylate de méthyle, le poly-4-méthylpentène-l, le polyacétal, le polyformaldéhyde, le polyoxyméthylène, le polypropylène, l'éther polyphénylique, l'oxyde de polyphénylène, le sulfure de polyphenylène, le polystyrène, le polythiophène, le polytétrafluoroéthylène, le polyuréthane, le chlorure de polyvinyle, le chlorure de polyvinylidène, le chlorure de polyvinyle chloré, le polyfluorure de vinylidène, le polyfluorure de vinyle, la cellulose régénérée, les silicones, le polydiméthyle siloxane, l'ABS,
**caractérisé en ce que** ledit catalyseur est un enzyme sélectionné parmi le sous-groupe d'anhydrases carboniques, lesdits sels inorganiques étant du type de sels de carbonates, carbonates d'hydrogène, sulfates, nitrates de magnésium, calcium, potassium, brome, carbone, strontium, bore, silicium, fluor, argon, azote et/ou un mélange de ces composés,
ladite réaction étant une réaction de décarboxylation et intervenant pour la transformation de sels inorganiques en dioxyde de carbone et eau selon la réaction suivante :
HCO₃⁻⁻ + H⁺ ↔ H₂O + CO₂.

2. Dispositif selon la revendication 1, dans lequel ledit conduit (3) est doté d'une entrée (4) et d'une sortie (5) pour l'eau qui doit être traitée.

3. Dispositif selon les revendications 1 et 2, **caractérisé en ce qu'**il comprend ledit enzyme à une concentration de préférence entre 0,001% et 30%, lesdits pourcentages concernant le poids total, et plus préférablement à une concentration comprise entre 0,005% et 1%, lesdits pourcentages concernant le poids total.

4. Dispositif selon l'une quelconque des revendications précédentes, **caractérisé en ce que** ledit support (2) constitué de matière polymère comprend une pluralité de fibres synthétiques.

5. Dispositif selon la revendication 4, **caractérisé en ce que** ledit support (2) constitué de matière polymère a, au moins dans l'une de ses parties, une forme sensiblement en treillis, de façon à définir une pluralité de cavités ayant des dimensions comprises de préférence entre 1 nm et 20 nm, qui peuvent être traversées par l'eau et d'autres fluides pour les soumettre à l'action dudit catalyseur, associées à ladite au moins une partie sensiblement en treillis dudit support (2).

6. Dispositif selon la revendication 5, **caractérisé en ce que** ladite au moins une partie dudit support (2) constitué de matière polymère est composée sensiblement par ladite pluralité de fibres synthétiques, disposées selon ladite configuration en treillis.

7. Dispositif selon la revendication 6, **caractérisé en ce que** ledit support (2) est constitué sensiblement par une membrane composée de fibres creuses de polysulfone, qui définissent des pores respectifs, ledit catalyseur étant de préférence contenu dans au moins l'un desdits pores et l'épaisseur desdites fibres.

8. Dispositif selon l'une quelconque des revendications précédentes, **caractérisé en ce qu'**il comprend des moyens pour capturer ladite enzyme à l'intérieur dudit support (2), pour s'opposer à et lutter contre la libération de ladite enzyme dans l'environnement, lesdits moyens de capture étant de préférence sélectionnés parmi lesdites cavités ayant des dimensions inférieures à celles des molécules de ladite enzyme, une liaison chimique du type covalent entre ladite matière polymère dudit support (2), et une maille desdites fibres polymères, conçue pour conserver physiquement lesdites molécules de ladite enzyme.
